# EUROPEAN PATENT SPECIFICATION

(11) **EP 3 263 258 B1**
(45) Date of publication and mention of the grant of the patent: **01.05.2019**
(21) Application number: 17001066.4
(22) Date of filing: 23.06.2017
(51) Int. Cl.: B23D 45/10, B27B 5/075, B23D 59/00, B27G 19/10

(54) **METHODS AND APPARATUS FOR SAW BLADES ALIGNMENT**
VERFAHREN UND VORRICHTUNG ZUR SÄGEBLATTAUSRICHTUNG
PROCÉDÉS ET APPAREIL POUR L'ALIGNEMENT DE LAMES DE SCIE

(30) Priority: 27.06.2016 IT UA20164663
(43) Date of publication of application: 03.01.2018
(73) Proprietor: Naldi, Valter, 40137 Bologna (IT)
(72) Inventor: Naldi, Valter, 40137 Bologna (IT)

(56) References cited:
- EP-A1- 2 198 998
- EP-A1- 2 316 601
- EP-A2- 1 066 906
- WO-A1-2011/114364
- DE-A1- 19 520 108
- DE-A1-102014 208 304

## Description

The invention relates to an operating method concerning a cutting assembly of a panel cutting machine.

In particular, the invention relates to a method for the correct alignment between a circular saw or cutting blade and a relative scorer, both to be used in a panel cutting machine.

Therefore, the method according to the invention is aimed at aligning a set of blades to be used in a machine (blade and scorer) avoiding the problems of the systems used so far by means of a particular reading and processing system acting upon both blades.

In the field of wood panel processing or similar, it is known to use cutting machines provided with a general frame, with a moving assembly to move stacks of panels towards a cutting station, and with a cutting assembly, which is carried by a saw carriage and is able to cut the stack of panels crosswise.

The cutting assembly usually uses a circular saw, which projects from a longitudinal slit obtained in a horizontal base integral to the frame, on which a generic panel or stack of panels to be cut is arranged, so as to cut said panel or panel stack according to a vertical plane. In some cutting machine, during the cut, the stack is clamped on the working plane of the machine by pressing organs.

The cutting assembly comprises a circular cutting blade, which is designed to cut the panel or the stack of panels along its entire height, and a scorer, which is also shaped like a circular blade, but has a diameter that is definitely smaller than the one of the cutting blade. The scorer, as the saw carriage moves towards the stack of panels in some machines or as the panels move towards the group of fixed blades in other cutting machines, precedes the cutting blade so as to score the lower surface of the panel or of the stack of panels.

Making a score on the lower surface of the panel or of the stack of panels is necessary, especially for chipboard panels with high-value coatings, so as to allow the circular blade to come out of the lower surface of the panel in direct contact with the working plane without the production of chipping on the edges of the cut performed by the circular saw.

Therefore, the need to have optimal cuts on all the surfaces of the panels has led to the adoption, in the greatest part of the cutting machines, of the aforesaid scorer tools, which are designed to carry out the aforesaid scores so as not to chip the lips of the cut obtained on the lower surface of the panel in direct contact with the working plane. The scorer usually rotates in the opposite direction relative to the circular saw and generally penetrates into the lower panel for a couple of millimetres.

However, a problem arising in cutting assemblies of the type described above lies in the alignment of the cutting blade with the scorer. As a matter of fact, in order to obtain the desired effect, the cut made by the cutting blade must be inside the score produced by the scorer on the lower surface of the panel or of the stack of panels and, furthermore, said cut must be perfectly centred relative to the score. Furthermore, for a good cutting quality, which can be universally recognized as such, the width of the score of the scorer must be merely slightly greater than the thickness of the blade, so that the difference between the width of the score and the one of the cutting blade is almost imperceptible.

The alignment between the cutting blade and the scorer is usually carried out by hand by the operator making some test cuts. Therefore, there is a significant waste of time, if this operation must be carried out every time the blade set needs to be changed.

Attempts made in the past to solve this problem are descried in German patent no. DE-B4-19520108 (SCHELLING), in European patent no. EP-B1-1 066 906 (BIESSE) and in European patent no. EP-B1-2 316 601 (NALDI).

EP2316601A1 from the present applicant discloses all the features of the preamble of independent method claim 1.

WO2011/114364A1 also from the present applicant discloses an operating method relating to the correct alignment of a scorer and of a cutting blade, said scorer being provided with a plurality of straight teeth with an adjustable thickness.

DE-B4-19520108 (SCHELLING) discloses a machine that includes an apparatus to measure the size features of the blades by means of LED or laser sensors. The method used for the alignment between the cutting blade and the relative scorer fitted on the machine involves the measurement, in the machine, of the thickness of the tooth of the cutting blade and of the characterizing sizes of the tooth of the scorer, namely lower base, upper base and height of the tooth; all the aforesaid measurements, both of the cutting blade and of the scorer, relate to a common reference plane, which is parallel to the blades. After having measured all these parameters, the system calculates the alignment position by processing the data collected. Therefore, the system is very slow due to the complicated measurement of the three characterizing sizes of the trapezoid-shaped tooth of the scorer and slows down the production of the machine every time the blades need to be changed.

On the other hand, the solution offered by EP-B1-1 066 906 (BIESSE) is affected by the drawback of having to use a scorer that remains sharp for a long time, as it is to be used with different blades (which wear out every two or three hours, depending on their use). In this case, the only scorers that can be used are diamond scorer, which, though, are extremely expensive and can easily be damaged beyond repair due to the impurities contained in the panels. Hence, operators usually prefer normal scorers with tungsten teeth, which are not very expensive, even though they last approximately as much as the cutting blades made of the same material. This means that both blades need to be changed at the same time, which requires the manual adjustment of the scorer, thus making the system according to the patent useless.

The system described in EP-B1-2 316 601 (NALDI) involves the automatic alignment of blade and scorer by means of a reading system acting upon both blades, using a sample alignment of a known blade set as comparison basis for following adjustments. Therefore, all the following automatic adjustments will obviously have the same features as the sample one and, if the latter is not carried out in a precise and accurate manner, the following ones will have the same defects.

Hence, the object of the invention is to provide a method defined by the features of independent claims 1 and 11 for the correct alignment between a cutting blade and a relative scorer, which is not affected by the aforesaid drawbacks.

The invention also provides an apparatus defined by the features of independent claim 13.

The invention will now be described with reference to the accompanying drawings, which show a non-limiting embodiment thereof, wherein:
- figure 1 schematically shows a cutting assembly concerning a cutting machine in relation to a machine plane;
- figure 2 schematically shows a transverse view of the cutting assembly of figure 1;
- figure 3 schematically shows a transverse view of the cutting assembly of the previous figures with lifted blades in operating position, in an embodiment of the scorer with trapezoid-shaped teeth;
- figure 4 schematically shows a transverse view of the cutting assembly of figures 1 and 2 with lifted blades in operating position, in an embodiment of the scorer with straight teeth with an adjustable thickness;
- figure 5 schematically shows a cutting assembly relating to a cutting machine (not shown entirely) with the measurement system positioned above the cutting blade;
- figure 6 schematically shows a cutting assembly relating to a cutting machine (not shown entirely) with the measurement system positioned above the scorer blade;
- figure 7 schematically shows a cutting assembly relating to a cutting machine (not shown entirely) with an alternative measurement system positioned above the cutting blade; and
- figure 8 schematically shows a cutting assembly relating to a cutting machine (not shown entirely) with an alternative measurement system positioned above the scorer blade.

In the accompanying figures, number 10 indicates a cutting assembly belonging to a cutting machine 1 (not shown entirely, for the sake of simplicity).

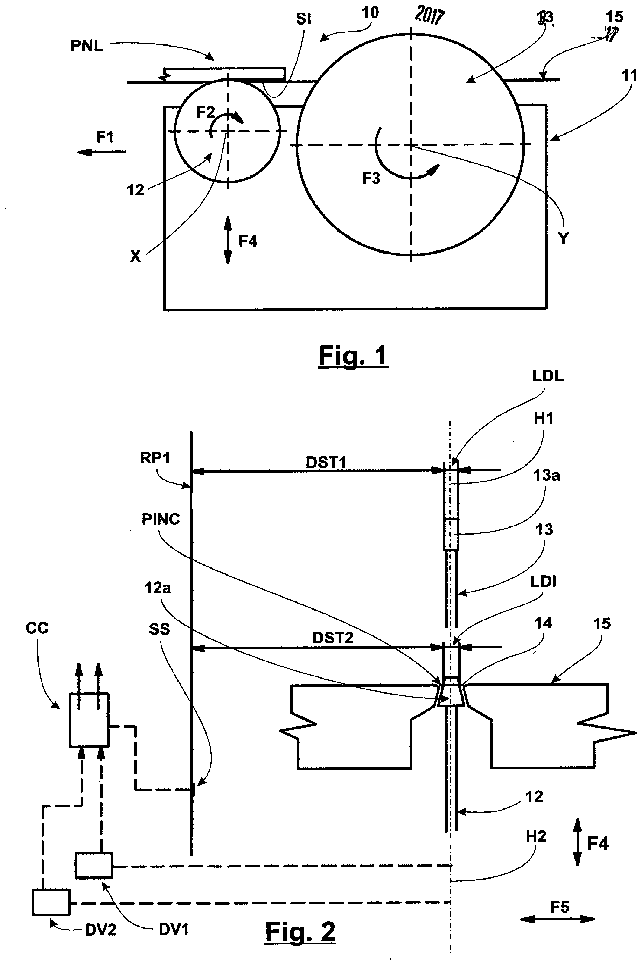

The cutting assembly 10 comprises, in turn, a saw carriage 11 (figure 1), which during the cut moves according to an arrow (F1), but in some machines is fixed while the panel moves according to an arrow opposite to (F1), on said saw carriage 11 there being mounted a scorer 12 (which, in use, rotates around an axis (X) according to an arrow (F2)), followed by a cutting blade 13 (which, in use, rotates around an axis (Y) according to an arrow (F3)). As it is known, the scorer 12 and the cutting blade 13 usually rotate in opposite directions.

The scorer and the cutting blade 13 both project from a slit 14 made in a working plane 15 of the cutting machine 1 (figure 2). On the working plane 15 there are, resting on it, a panel (PNL) or a stack of panels to be cut (figure 1), if necessary pushed on the working plane 15 by a pushing assembly (not shown).

As it is known, the aim of the scorer 12 is that of creating a score (SI) on the lower surface of the panel (PNL) resting on the working plane 15, said score (SI) having to be perfectly aligned with the blade 13 during the actual cut of the panel (PNL). Furthermore, the score (SI) made in the lower surface of the panel (PNL) in correspondence to a scoring plane (PINC), which substantially coincides with the working plane 15, must be barely larger than the thickness of the blade 13 during the cut.

The rotations of the scorer 12 and of the cutting blade 13 are obtained by means of known moving means, which are not shown in the figures.

The cutting assembly 10 further comprises the following devices:
(1) an electronic control unit (CC), which is electronically connected to a measurement system (SS) (mechanical, laser, LED, infrared, camera, etc.), which is designed and positioned so as to measure a distance (DST1) of the tooth of the cutting blade 13 and a distance (DST2) of the tooth of the scorer 12 relative to a first reference plane (RP1) (the meaning of these distances will be better explained in the description below) and so as to measure the thicknesses of the respective teeth (LDI, LDL) of the aforesaid scorer 12 and cutting blade 13; said electronic control unit (CC) can be completely independent or it can be part of the numerical control of the cutting machine (1). The electronic control unit (CC) can also be programmed so as to be suited to generate data that are transferred, manually or through computer means, to the numerical control of the cutting machine (1);
(2) a first moving device (DV1), which enables the vertical movements of the scorer 12 according to a double-headed arrow (F4) (figure 2);
(3) a second moving device (DV2), which enables the lateral movements of the scorer 12 according to a double-headed arrow (F5) (figure 2).

As usual, the sole scorer 12 is provided with known adjusting and operating means and it can be moved vertically (arrow (F4)) and/or laterally (arrow (F5)), whereas the cutting blade 13 usually is fixed relative to the saw carriage 11.

Figure 2 also shows a central plane (H1) of the teeth of the cutting blade 13 and a central plane (H2) of the teeth of the scorer 12.

The cutting blade 13 is provided with a plurality of straight teeth 13a, which means that they have a basically constant cross section. In a first embodiment of the operating method, the scorer 12 is provided, in turn, with a plurality of teeth 12a with a trapezoidal cross section. In this type of scorer, the scoring width on the panel (PNL) can change depending on the thickness of the teeth 12a in correspondence to the scoring plane (PINC). Therefore, it is clear that a precise adjustment of the vertical position of the scorer 12 along its central plane (H2) and according to direction and senses (F5) is crucial to define an optimal width of the score (SI) made in the panel (PNL).

For the purpose of the method according to the invention, the structure of the measurement system (SS) mentioned above is not relevant and the system can be chosen among different devices or in combination with known devices of the field. In any case, hereinafter, (SS) will indicate all the measurement devices (including possible displaying and/or processing devices) designed to fulfil the functions involved in the operating steps of the method and (SSL) will indicate a measurement and reading device for the parameters concerning the scorer 12 and the cutting blade 13 and for the aforesaid distances (DST1), (DST2). As an indication, the measurement and reading device (SSL) can be movable so as to reach the area of the teeth of the blades of the saw carriage 11 or it can be fixed, in which case it is positioned in such a way that the blades of the saw carriage 11 and/or the saw carriage 11 itself reach in succession the area of the measurement and reading line of the device (SSL).

In order to understand the operating method according to the invention, we need to introduce the concepts of "reference plane (RP1)" and "measurement plane (RP2)".

The "reference plane (RP1)" is a predefined fixed plane parallel to the central planes (H1) and (H2) of the teeth of the blades. The "measurement plane (RP2)" is a plane that transversely cuts the aforesaid teeth of the blades 12, 13 and is perpendicular to the reference plane (RP1) (as it will be evident from the following description of the operating steps of the method).

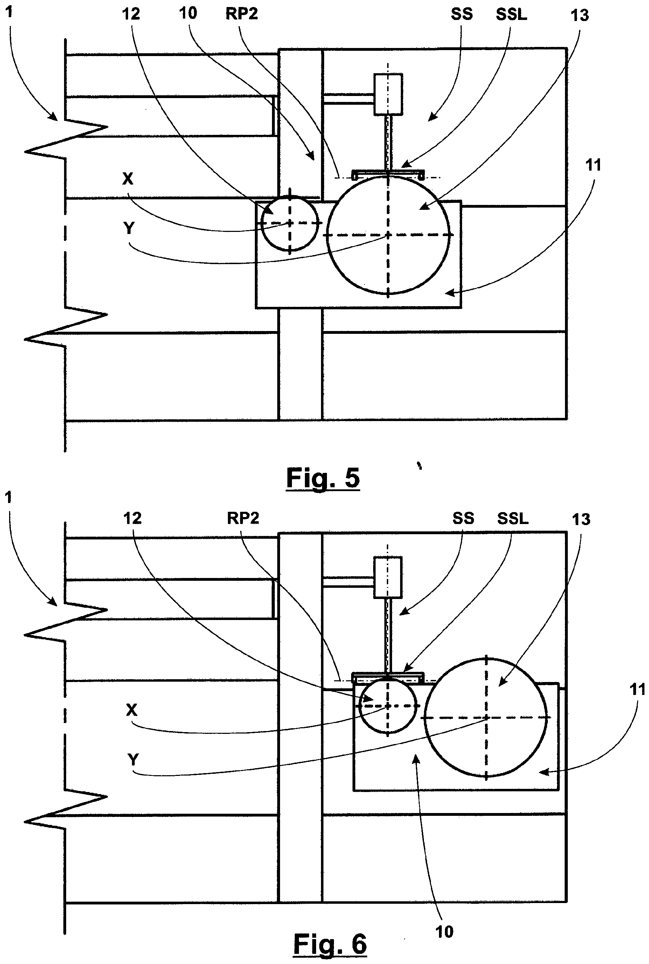

By way of example, figures 5 and 6 show a measurement plane (RP2) referred to the positioning of the reading device (SSL) on the teeth of the cutting blade 13 and of the scorer 12, respectively, with both blades lifted and in operating position. In this position, the measurement plane (RP2) on the tooth of the scorer can coincide with the scoring plane (PINC) or it can be very close to the latter. However, the position of the measurement plane (RP2) on the respective teeth 12a and 13a of the blades 12 and 13 can be different, depending on the relative position of the blades 12 and 13 in respect to the working plane 15. In particular, the position of the measurement plane (RP2) on the scorer tooth 12a, besides coinciding with the scoring plane (PINC) with the scorer 12 in operating position, can also coincide with the scoring plane (PINC) with the scorer 12 in any position thereof, as the vertical position of the scorer 12 during the measurement in respect to its operating position can always be known.

Furthermore, the position of the measurement plane (RP2) on the tooth 12a of the scorer 12 can also be defined at any known distance from the scoring plane (PINC) or from the rotation axis (X) of the scorer 12.

In some cutting machines, the vertical movement of the scorer 12 consists of an actual axle controlled by the numerical control of the cutting machine. This solution obviously implies that the device DV1 for the vertical adjustment of the scorer coincides with the vertical moving device of the scorer 12 for its normal operation during the cutting steps.

Basically, as the distance of the rotation axis (X) of the scorer 12 relative to the working plane 15 can be known or anyway measurable, all the different positions assumed by the scorer 12 are known as well and, therefore, these positions can be related to the measurement plane (RP2) on the scorer tooth 12a. By the way, it is also possible to perfectly know the position of the axis (X) of the scorer 12 (and, of course, of the axis (Y) of the blade 13) along the travel of the saw carriage 11 in direction (F1) or in a direction opposite to said direction (F1) and, hence, it is also possible to relate this position of the axis (X) (and of the axis (Y)) to the position of the reading device (SSL) and, thus, of the relative measurement plane (RP2).

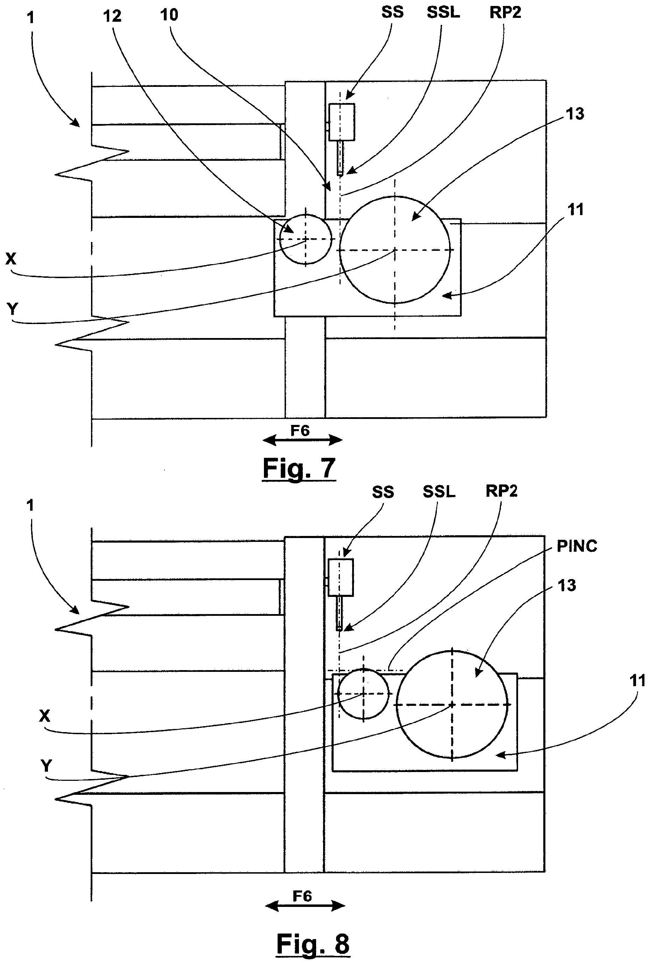

Figures 7 and 8 show, indeed, the measurement system (SSL) positioned in a fixed manner with the measurement plane (RP2) positioned vertically and in such a way that the saw carriage 11, according to successive position changes, can move both the teeth 13a of the blade 13 and the teeth 12a of the scorer 12 to a measurement position, namely in correspondence to the measurement plane (RP2). This measurement position can be defined knowing the distances of the rotation axes (Y) and (X) of the blades relative to the working plane 15, thus consequently positioning said rotation axes (Y) and (X) of the blades along the travel of the saw carriage 11 according to direction and senses (F6) relative to the measurement system (SSL) and to the aforesaid measurement plane (RP2)

The operating method according to the invention comprises a step (s1) for reading the thickness (LDL) of a tooth 13a of the cutting blade 13 and the first distance (DST1) thereof relative to the reference plane (RP1) (figures 5 and 7).

To this regard, the reading device (SSL) of the measurement system (SS) is positioned in correspondence to the cutting blade 13 (or the cutting blade 13 is positioned in correspondence to the reading device (SSL)) (figures 5 and 7), so as to measure the thickness (LDL) of the tooth 13a, substantially in any position thereof, the tooth being substantially straight (but it could also be possible to measure, in a known manner, for example by means of scanning, the portion of the tooth 13a that has the largest cross section).

Then, the first distance (DST1) is measured by means of the same measurement device (SSL) (or by means of a second reading device, if necessary), according to a known technique. Therefore, the position of the central plane (H1) of the tooth 13a relative to the reference plane (RP1) can easily be obtained by measuring the distance (DST1) and by measuring the thickness (LDL) of the tooth 13a of the blade 13.

In a step (s2) of the method, which is not necessarily subsequent to step (s1) described above, but can be preparatory to the execution of the operating method described herein, the position of the measurement plane (RP2) relative to the scorer 12 is defined by positioning the reading device (SSL) in correspondence to a tooth 12a of the scorer 12 (or by moving the scorer 12 along direction and senses (F4) and/or by moving the saw carriage 11 along its travel until a tooth 12a of the scorer 12 reaches the area of the reading line of the device (SSL)) (figures 6 and 8). As already mentioned above, this measurement plane (RP2) on the tooth 12a of the scorer can be parallel to and coincide with the scoring plane (PINC) on the working plane 15, in which case the reading of the thickness (LDI) must obviously coincide with the scoring width (LDIC) on the scoring plane (PINC) and working plane 15.

A simple check can be carried out, for example, by making a score (SI) in the panel (PNL) with the blade 13 lowered and in rest position, thus controlling with a known measurement system that the scoring width (LDIC) of the score (SI) perfectly corresponds to the reading (LDI) of the tooth 12a that was just carried out. Therefore, in case it is needed, the position of the measurement plane (RP2) can be changed accordingly until they coincide.

In case the measurement plane (RP2) does not coincide with but is anyway parallel to the scoring plane (PINC) or to the working plane 15, at a known or measurable distance from said planes, the relative distance must be kept into account and the relative movements of the scorer 12 must be properly calculated in order to then check them, for example, with the same score (SI) in the panel. In this case, again, a simple check of the correspondence between the width of the score (SI) in the panel and the thickness (LDI) detected on the measurement plane (RP2) can allow the measurements of the distance between the measurement plane (RP2) and the scoring plane (PINC). As a matter of fact, by acting upon the vertical adjustment of the scorer according to direction and senses (F4) by means of the device (DV1), the thickness of the tooth (LDI) measured on the measurement plane (RP2) can be brought to a value that is equivalent to the one of the scoring width (LDIC) of the score (SI) in the panel. Hence, this movement (according to direction and senses (F4)) represents the known distance between the measurement plane (RP2) and the scoring plane (PINC). Other methods can obviously be used for this purpose.

As the scorer has a circular shape, the same situation occurs in case the measurement plane (RP2) is not parallel to the scoring plane (PINC) or to the working plane 15, but it is on any plane on the tooth 12a perpendicular to any radius of the scorer and at a known distance from the rotation axis (X) of the scorer 12. As a matter of fact, as the position of the axis (X) of the scorer 12 relative to the scoring plane (PINC) or to the working plane 15 can be known or measurable and as the distance of the measurement plane (RP2) from the axis (X) can be known or measurable, having a given reading of the tooth (LDI), it will be possible to easily detect and/or calculate the displacement to be applied to the position of the scorer 12 in order to obtain, on the scoring plane (PINC), the desired scoring width (LDIC) compatible with the thickness (LDL) of the tooth 13a of the relative blade 13.

In a step (s3), which is subsequent to step (s2), the aim is that of detecting and measuring the thickness (LDI) of the tooth 12a and the second distance (DST2) thereof relative to the reference plane (RP1) in correspondence to the measurement plane (RP2) as determined.

Step (s3) is followed by a further step (s4), during which, in a first solution, in which the measurement plane (RP2) coincides with the scoring plane (PINC), the position of the scorer 12 relative to the measurement plane (RP2) is adjusted so as to obtain, on said plane, a given value of the thickness (LDI) of the tooth 12a coinciding with a scoring width (LDIC) on the scoring plane (PINC) that is compatible with the thickness (LDL) measured for the tooth 13a of the cutting blade 13 in step (s1), so as to obtain a cut without chipping and according to the desired features.

In case the measurement plane (RP2) does not coincide with the scoring plane (PINC) as already mentioned above, during said step (s4) the position of the scorer 12 relative to the measurement plane (RP2) is adjusted so as to obtain, on said plane, a given value of the thickness (LDI) of the tooth 12a corresponding to a scoring width (LDIC) on the scoring plane (PINC) that is compatible with the thickness (LDL) measured for the tooth 13a of the cutting blade 13 in step (s1), so as to obtain a cut without chipping and according to the desired features.

Again, in case the measurement plane (RP2) does not coincide with the scoring plane (PINC) as already mentioned above, during said step (s4) the position of the scorer 12 can be calculated and, as a consequence, adjusted so as to obtain a scoring thickness (LDIC) of the tooth 12a on the scoring plane (PINC) that is compatible with the thickness (LDL) measured for the tooth 13a of the cutting blade 13 in step (s1), so as to obtain a cut without chipping and according to the desired features.

The measurement solution shown in figures 7 and 8 allows to have the reading of the tooth (LDI) carried out on the measurement plane (RP2) coincide with the scoring width (LDIC) on the scoring plane (PINC) by moving the saw carriage 11 to an adequate position relative to the measurement system (SSL) (with the distance between the axis (X) and the scoring plane (PINC) equivalent to the distance between the axis (X) and the vertical measurement plane (RP2)). Through the movement of the saw carriage 11 according to direction and senses (F6) shown in figure 8, it is possible to measure a dimension or a measure movement (QSCL) of the saw carriage 11 needed to cause the measured thickness (LDI) to coincide with a scoring width (LDIC) of the tooth 12a on the scoring plane (PINC) that is compatible with the thickness (LDL) measured for the tooth 13a of the cutting blade 13 in step (s1), so as obtain a cut without chipping and according to the desired features. Said dimension or measure movement (QSCL) of the saw carriage 11 can then be used for the vertical adjustment of the scorer in direction (F4).

Alternatively it is possible to measure, through the position of the saw carriage 11 along direction and senses (F6) shown in figure 8, the measure of the distance (QRCL) between the rotation axis (X) of the scorer 12 and the vertical measurement plane (RP2), where the measured thickness (LDL) is equivalent to a scoring width (LDIC) that is compatible with the thickness (LDL) of the tooth of the blade 13. Hence, this measure (QRCL) will be the same measure as the distance between the rotation axis (X) and the scoring plane (PINC), to which the scorer 12 is to be brought in operating position in order to have, on said scoring plane (PINC), said scoring width (LDIC) that is compatible with the measured thickness (LDL).

To sum up, the adjustment of the scorer 12 can be carried out according to at least seven different main techniques.

In a first technique, in case the reading of the thickness (LDI) on the measurement plane (RP2) coincides with the scoring width (LDIC) on the scoring plane (PINC), the adjustment operation involves the vertical movement of scorer, according to a direction and senses indicated with (F4) in figure 2, and the following reading of the values of the thickness (LDI) until reaching of a thickness (LDI) equivalent to the scoring width (LDIC) that is compatible with the thickness (LDL) of the relative blade 13 on the measurement plane (RP2). This operation can be carried out by hand by an operator through the manual or motor-driven adjustment system (DV1). The result of the operation can be continuously displayed on the screen of the electronic control unit (CC) or external means (e.g. coloured LEDs) can be provided in order to inform the operator of the convergence of the measured value towards the desired value, thus making the following steps easier.

In a second alternative technique, which is similar to the previous one, the adjustment operation is automatically implemented by the electronic control unit (CC) and involves the transmission of proper commands to the numerical control unit of the cutting machine or to another unit that directly controls a possible motor-driven solution of the adjustment system (DV1), until the value of the thickness (LDI) on the measurement plane (RP2) reaches the value compatible with the value (LDL) of the relative blade 13 measured previously.

In a third alternative technique, in case the reading of the thickness (LDI) on the measurement plane (RP2) coincides with the scoring width on the scoring plane (PINC) according to the measurement solution shown in figure 8, the adjustment operation involves the measurement of the measure movement (QSCL) of the saw carriage, according to direction and senses (F6), and the following reading of the values of the thickness (LDI) until reaching of a thickness (LDI) equivalent to the compatible scoring width (LDIC) on the measurement plane (RP2). The result of the operation can be continuously displayed on the screen of the control unit or external means can be provided in order to inform the operator of the convergence of the measured value towards the compatible value, thus making the following steps easier. This movement value (QSCL) can be manually or automatically entered into the manual or motor-driven adjustment system (DV1) in order to adjust the scoring depth, thus obtaining the scoring width (LDIC) on the scoring plane (PINC) that is compatible with the reading (LDL) of the relative blade 13.

In a fourth alternative technique, again according to the measurement solution shown in figure 8, the adjustment operation involves the measurement of the distance (QRCL) between the rotation axis (X) of the scorer 12 and the vertical measurement plane (RP2) in correspondence to a reading (LDI) equivalent to the scoring width (LDIC) that is compatible with the thickness of the tooth (LDL) of the relative blade 13. This distance (QRCL) will then be the distance to be interposed between the rotation axis (X) of the scorer 12 and the scoring plane (PINC) in order to obtain the same scoring width (LDIC) on the same scoring plane (PINC).

In a fifth alternative technique, in case the measurement plane (RP2) does not coincide with the scoring plane (PINC), but it is positioned at a known distance from said plane or, anyway, even at a known distance from the rotation axis (X) of the scorer 12, the adjustment operation involves, at first, the vertical movement of the scorer 12, according to a direction and senses indicated with (F4) in figure 2, by a value and in a direction that are equivalent to the known distance between the measurement plane (RP2) and the scoring plane (PINC) (therefore, the measurement plane (RP2) is aligned with the scoring plane (PINC)). The operation goes on with the vertical movement of the scorer 12, again according to a direction and senses indicated with (F4), and with the following reading of the values of the thickness (LDI) until reaching of a thickness (LDI) equivalent to the scoring width (LDIC) that is compatible with the thickness (LDL) of the relative blade 13 on the measurement plane (RP2). Finally, the scorer 12 needs to be repositioned, according to a direction and senses indicated with (F4), in a direction and by a dimension that are equivalent to the known distance between the measurement plane (RP2) and the scoring plane (PINC). Basically, with this adjustment operation, the final reading (LDI) of the tooth of the scorer on the plane (RP2) will have a given value, which will correspond to a given scoring width (LDIC) that is compatible, on the scoring plane (PINC), with the thickness (LDL) measured when the scorer will be in operating position on the working plane 15. This operation can be carried out by hand by an operator through a manual or motor-driven adjustment system (DV1). The result of the operation can be continuously displayed on the screen of the electronic control unit (CC) or external means can be provided in order to inform the operator of the convergence of the measured value towards the desired value, thus making the following steps easier.

In a sixth alternative technique, which is similar to the previous one, the adjustment operation is automatically implemented by the electronic control unit (CC) and involves the transmission of proper commands to the numerical control unit of the cutting machine or to another unit that directly controls a possible motor-driven solution of the adjustment system (DV1), until the final value of the thickness (LDI) on the measurement plane (RP2) will correspond to a given scoring width (LDIC) that is compatible, on the scoring plane (PINC), with the thickness (LDL) measured when the scorer will be in operating position on the working plane 15.

In a seventh alternative technique, in case the measurement plane (RP2) does not coincide with the scoring plane (PINC), but it is positioned at a known distance from said plane or, anyway, at a known distance from the rotation axis (X) of the scorer 12, and in which the convergence angles (or base angles) of the trapezoidal cross section of the tooth 12a are known (or, anyway, can be measured through two distinct measurements of the thickness (LDI) of the tooth of the scorer 12 at a predetermined distance, for example at a distance of 1 mm from one another), the adjustment operation involves the definition, by means of a simple calculation, of the extent of the vertical movement of the scorer 12 needed to obtain the scoring width (LDIC) on the scoring plane (PINC) on the base of the value (LDI) measured in the plane (RP2), and of a following command sent to the adjustment system (DV1), which is carried out by the operator or directly emitted by the control unit (CC), so as to perform the calculated movement.

Obviously, different combinations of these techniques or different alternative steps would be possible to obtain the result of an optimal adjustment of the scorer 12.

In a further operating step (s5) of the method, the position of the central plane (H2) of the teeth of the scorer 12 is determined using the measure of the distance (DST2) of the tooth of the scorer 12 relative to the reference plane (RP1) and the relative value of the thickness (LDI) on the measurement plane (RP2) already measured in the previous step (s3).

A variant of this operating step involves the determination of the position of the central plane (H2) of the tooth 12a of the scorer 12 using the data of a new measurement of the second distance (DST2) of the tooth 12a from the reference plane (RP1) and of the thickness (LDI) of the tooth 12a, in correspondence to the measurement plane (RP2) or on another plane arranged at a known distance from the measurement plane (RP2) or from the scoring plane (PINC). This alternative, if carried out with the vertical position of the scorer already adjusted after step (s4) and when the measurement plane (RP2) coincides with the scoring plane (PINC), leads to the advantage of being able to then determine the position of the axis (H2) perfectly in correspondence to the scoring plane (PINC), thus avoiding some problems due a possible imperfect congruence of the two base angles of the tooth 12a of the scorer 12.

The value measured and/or determined in step (s5) is then used in a following step (s6) to adjust the lateral positioning of the scorer 12, according to direction and senses (F5), and - hence - of the second distance (DST2) from the reference plane (RP1), until the central plane (H2) of the scorer 12 coincides with the central plane (H1) of the cutting blade 13. This operation can be carried out by hand by an operator through a manual or motor-driven adjustment system (DV2). The result of the operation can be continuously displayed on the screen of the electronic control unit (CC) or external means can be provided in order to inform the operator of the convergence of the measured values towards the desired values (H1) and (H2), thus making the following steps easier.

In this case, again, in an alternative technique, the adjustment operation involves the transmission of proper commands to the numerical control unit of the cutting machine or to another control unit that directly controls a possible motor-driven solution of the adjustment system (DV2), until the values of the central planes (H1) and (H2) coincide.

In a further alternative technique, the adjustment operation involves the definition of the extent of the horizontal movement of the scorer 12 needed to obtain the alignment of the central planes (H1) e (H2) and of a following command, emitted by the operator or directly by the electronic control uni (CC), for carrying out the movement calculated by sending proper movement data to the motor-driven adjustment system (DV2).

This operation completes the alignment of the aforesaid scorer 12 and cutting blade 13. Variations to or combinations of the aforesaid techniques or different steps can always be possible, without for this reason going beyond the scope of protection of the patent.

As far as the operating steps involving reading operations or measurements are concerned, it should be pointed out that, when referring to the reading or to the measurement of the tooth (LDI), (LDL) of the scorer 12 or of the blade 13, both regardless of whether they are new or sharpened, we mean the possible reading or measurement of the thickness of the single tooth, of a mean of the measurements carried out on different teeth or on all teeth, of statistical means or of other methods that can be used each time depending on the tools in use, and also - possibly - with the latter in motion. The same consideration also applies to the reading or the measurement of the distances (DST1), (DST2) of the teeth of the blade and the scorer from the reference plane (RP1).

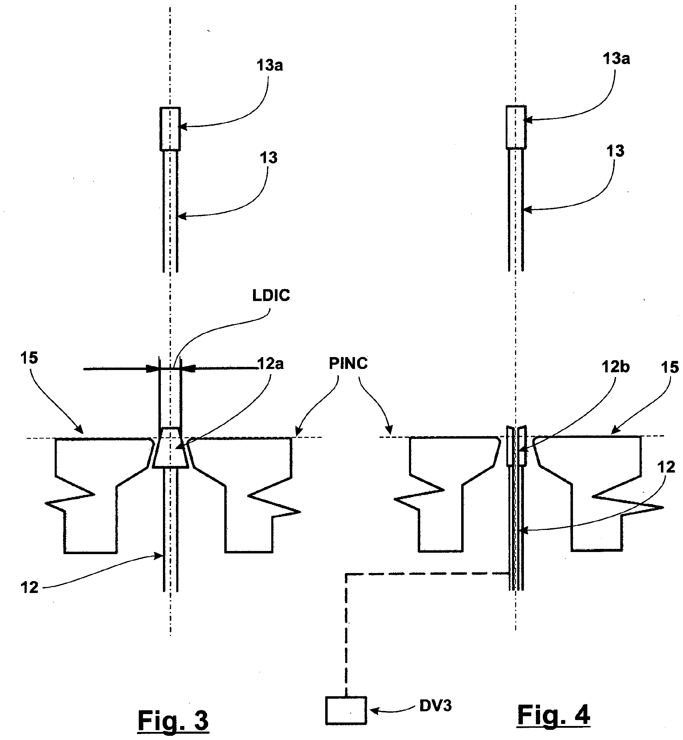

A second embodiment of the operating method according to the invention applies when the saw carriage 11 is provided with a scorer 12 with two mechanically coupled blades (or a blade divided into two halves) and with mechanical or assisted adjustment of its scoring width by means of a moving device (DV3) (figure 4). Each single blade is provided with its own teeth, which, when coupled, produce a corresponding tooth 12b.

As already described above for the first embodiment of the method, it is necessary to measure the tooth 13a of the cutting blade 13 together with the relative distance (DST1) from the reference plane (RP1) and to proceed to the determination of the relative axis (H1) (step (s1)). Then there are the definition of the measurement plane (step (s2)) and the measurement of the width (LDI) of the tooth 12a of the scorer 12 and of its distance (DST2) from the reference plane (RP1) (step (s3)); the following step (step (s4)) involves ordering the precise positioning of the thickness (LDI) of the tooth 12b of the scorer 12 to obtain a scoring width (LDIC) that is compatible with the measure of the thickness of the tooth of the blade (LDL) previously measured by means of the moving device (DV3), followed by the definition (step (s5)) and the alignment of the central planes (H1) and (H2) by means of the lateral moving device (DV2) taking into account the distance (DST2) and the measure of the final tooth (LDI) equivalent to the scoring width (LDIC).

In this case, the vertical adjustment does not obviously affect the scoring width and, therefore, it is not necessary for this purpose.

In some cases scorers with straight teeth can be used, where the thickness of the tooth is previously sized based on the thickness of the teeth of the cutting blade, namely with a thickness of the teeth that is already slightly greater than the one of the teeth of the cutting blade. In this case, after having carried out the measurement of the thicknesses of the teeth (LDL), (LDI) of the blade and of the scorer (already compatible) and of their distance from the common reference plane (RP1), it is sufficient to perform the alignment of the respective central planes (H1) and (H2) by means of the lateral moving device (DV2).

In this case, again, the vertical adjustment does not obviously affect the scoring width and, therefore, it is not necessary for this purpose.

It should be pointed out that, in practical applications of the method, the adjustments described above can take place in a completely automatic manner, in case the numerical control has the ability to give instructions to the lateral and vertical motors of the scorer (as well as of the thickness in scorers with a double blade) based on the readings made.

The same adjustment can further take place in a semi-automatic manner, in case the numerical control gives instructions to the operator on the movements to be carried out by means of the relative motors or by means of the simple mechanical adjustments performed by the operator.

To this aim, as already mentioned above, the simple displaying of the thicknesses of the teeth, as well as of the distance of the axes from the reference plane, can be very useful to the operator in order to optimize and accelerate the adjustment between the blade and the scorer. A simple coloured LED, which lights up when the lateral and vertical positions are reached, can be a valid assisted support for the operator in order to quickly obtain a perfect alignment in the machine between the blade and the scorer.

An advantage of the alignment operating method described above lies, first of all, in the fact that the alignment between the blade and the scorer can be carried out even without inserting any technological data concerning the tooth of the scorer; furthermore, the system works perfectly and quickly even with scorers having teeth with a different trapezoidal shape or even with teeth having the shape of a scalene trapezoid. This last configuration can occur when the teeth of scorer are used and sharpened different times in a not very professional way.

Another advantage that can be obtained with the invention is that of making this innovative alignment technology available also for machines already sold in the market and many years old, which do not have either an assisted motor-drive for the adjustment of the scorer or numerical controls that are suited to receive and carry out these instructions.

A further advantage of this adjustment system lies in its simplicity and in its immediacy, hence in its reduced cost.

## Claims

1. An operating method relating to the correct alignment of a scorer (12) and of a cutting blade (13) so as to obtain a cut without chipping and according to the desired features; said scorer (12) and cutting blade (13) belonging to a cutting assembly (10) of a cutting machine (1) for panels (PNL) and fitted on a saw carriage (11) with respective central planes (H2), (H1) parallel to one another and respective rotation axes (X), (Y) and, in particular, for the correct alignment of said scorer (12) relative to said cutting blade (13), said scorer (12) being provided with a plurality of teeth (12a) having a trapezoidal section, the method comprising the following steps, not necessarily in the order indicated below:
(s1) a step for measuring the thickness (LDL) of at least one tooth (13a) of said cutting blade (13) and a first distance (DST1) of said at least one tooth (13a) from a reference plane (RP1), the latter being parallel to the central planes (H2), (H1) of the aforesaid scorer (12) and cutting blade (13); said measuring steps being carried out by means of a measurement system (SS); said thickness (LDL) and said distance (DST1) determining the position of the central plane (H1) of said at least one tooth (13a) relative to the reference plane (RP1);
(s2) a step for carrying out the measurement of a thickness (LDI) of at least one tooth (12a) of said scorer (12) along a measurement plane (RP2), which extends through the section of the teeth (12a) of the scorer (12), by means of the measurement system (SS);
(s3) a step for measuring the thickness (LDI) of at least one tooth (12a) of said scorer (12) and a second distance (DST2) of said at least one tooth (12a) from said reference plane (RP1) in correspondence of said measurement plane (RP2); said measuring step being carried out by means of the measurement system (SS);
(s4) a step for adjusting the vertical position of said scorer (12), according to a direction and senses (F4), which takes place after said measuring step (s3) aimed at obtaining, with said scorer (12) in its operating position, a scoring width (LDIC) of said at least one tooth (12a) on said scoring plane (PINC) that is compatible with the measured thickness (LDL) of the aforesaid at least one tooth (13a) of the cutting blade (13);
(s5) a step for determining the position of the central plane (H2) of said at least one tooth (12a) relative to the reference plane (RP1);
(s6) a step for laterally adjusting the relative position between the cutting blade (13) and the scorer (12) according to direction and senses (F5), so as to cause the central planes (H1) e (H2) of said cutting blade (13) and of said scorer (12) to coincide;
the method being **characterized in that**
in step (s2) the exact position of said measurement plane (RP2) is defined precisely on the cutting machine (1) in respect to scoring plane (PINC) of the scorer (12) on the working plane (15), and namely said measurement plane (RP2) is defined either as coinciding with a scoring plane (PINC) of the scorer (12) itself on the working plane (15) of the cutting machine (1) or is shifted by a known distance relative to said scoring plane (PINC), or else said exact position is defined relative to said rotation axis (X).

2. A method according to claim 1, **characterized in that** during said step (s5) the determination of the position of the central plane (H2) of said at least one tooth (12a) relative to the reference plane (RP1) is carried out based on the second distance (DST2) and on the thickness (LDI) measured during step (s3).

3. A method according to claim 1, **characterized in that** said step (s5) for determining the position of the central plane (H2) of said at least one tooth (12a) relative to the reference plane (RP1) involves a new measurement of the second distance (DST2) and of the thickness (LDI) consequent to said adjusting step (s4); said new measurements (DST2), (LDI), being carried out in correspondence of said measurement plane (RP2) or of another plane located at a known distance from said scoring plane (PINC) and measurement plane (RP2); said thickness (LDI) and said distance (DST2) determining the position of the central plane (H2) of said at least one tooth (12a) relative to the reference plane (RP1).

4. A method according to claim 1-3, **characterized in that** said adjusting step (s4) involves an adjustment of the position of said scorer (12) relative to said measurement plane (RP2) which is aimed at obtaining, on the aforesaid plane (RP2), a value of the thickness (LDI) that is equivalent, with said scorer (12) in its operating position, to a scoring width (LDIC) of said at least one tooth (12a) on said scoring plane (PINC) that is compatible with the measured thickness (LDL) of the aforesaid at least one tooth (13a) of the cutting blade (13).

5. A method according to claim 1-3, **characterized in that** said adjusting step (s4) involves an adjustment of the position of said scorer (12) relative to said measurement plane (RP2) which is aimed at obtaining, on the aforesaid plane (RP2), a value of the thickness (LDI) corresponding, with said scorer (12) in its operating position, to a scoring width (LDIC) of said at least one tooth (12a) on said scoring plane (PINC) that is compatible with the measured thickness (LDL) of the aforesaid at least one tooth (13a) of the cutting blade (13).

6. A method according to claim 1-3, **characterized in that** during said step (s4) the aforesaid adjustment of the position of said scorer (12) involves the definition of said scoring width (LDIC) compatible with the measured thickness (LDL) of the at least one tooth (13a) of the cutting blade (13) based on the value of said measured thickness (LDI) and on the value of the base angles of the trapezoidal section of said at least one tooth (12a), so as to obtain said scoring width (LDIC) on the aforesaid scoring plane (PINC).

7. A method according to claim 1-3, **characterized in that** during said step (s4) the aforesaid adjustment of the position of said scorer (12) Involves the vertical movement of said scorer (12), according to a direction and senses (F4), depending on a measure (QSCL), (QRCL), measured through the movement of the saw carriage (11) during a step for measuring a thickness (LDI) coinciding with a scoring width (LDIC) compatible with the measured thickness (LDL) of the at least one tooth (13a) of the cutting blade (13), so as to obtain said scoring width (LDIC) on the aforesaid scoring plane (PINC).

8. A method according to any one of the claims 1-7, **characterized in that** the measurement plane (RP2) of said measurement system (SS) on said at least one tooth (12a) of the scorer (12) coincides with or is shifted by a known distance relative to the scoring plane (PINC) or relative to the rotation axis (X), when the scorer (12) itself is in its operating working position relative to the scoring plane (PINC).

9. A method according to any one of the claims 1-7, **characterized in that** the measurement plane (RP2) of said measurement system (SS) on said at least one tooth (12a) of the scorer (12) coincides with or is shifted by a known distance relative to the scoring plane (PINC) or relative to the rotation axis (X), when the scorer (12) itself is in a rest position or in another predefined position relative to the scoring plane (PINC).

10. A method according to any one of the claims 1-7, **characterized in that** the measurement plane (RP2) of said measurement system (SS) on said at least one tooth (12a) of the scorer (12) is arranged in any position of its diameter at a distance from the rotation axis (X) that is equivalent to the distance between the rotation axis (X) of said scorer (12) and said scoring plane (PINC) or is shifted by a known distance relative to the distance between the rotation axis (X) of said scorer (12) and said scoring plane (PINC).

11. An operating method relating to the correct alignment of a scorer (12) and of a cutting blade (13) so as to obtain a cut without chipping and according to the desired features; said scorer (12) and cutting blade (13) belonging to a cutting assembly (10) of a cutting machine (1) for panels (PNL) and fitted on a saw carriage (11) with respective central planes (H2), (H1) parallel to one another and respective rotation axes (X), (Y) and, in particular, for the correct alignment of said scorer (12) relative to said cutting blade (13), said scorer (12) being provided with a plurality of straight teeth (12b) with an adjustable thickness, the method comprising the following steps, not necessarily in the order Indicated below:
(s1) a step for measuring the thickness (LDL) of at least one tooth (13a) of said cutting blade (13) and a first distance (DST1) of said at least one tooth (13a) from a first reference plane (RP1), the latter being parallel to the central planes (H2), (H1) of the aforesaid scorer (12) and cutting blade (13); said measuring steps being carried out by means of a measurement system (SS); said thickness (LDL) and said distance (DST1) determining the position of the central plane (H1) of said at least one tooth (13a) relative to the reference plane (RP1);
(s2) a step for carrying out the measurement of a thickness (LDI) of at least one tooth (12b) of said scorer (12) along a measurement plane (RP2), which extends through the section of the teeth (12b) of the scorer (12), by means of the measurement system (SS);
(s3) a step for measuring the thickness (LDI) of at least one tooth (12b) of said scorer (12) and a second distance (DST2) of said at least one tooth (12b) from said reference plane (RP1) in correspondence of said measurement plane (RP2); said measuring step being carried out by means of the measurement system (SS);
(s4) a step for adjusting the thickness of at least one tooth (12b) of said scorer (12), which takes place after said step (s3), aimed at obtaining, with said scorer (12) in its operating position, a scoring width (LDIC) of said at least one tooth (12b) on said scoring plane (PINC) that is compatible with the measured thickness (LDL) of the aforesaid at least one tooth (13a) of the cutting blade (13);
(s5) a step for determining the position of the central plane (H2) of said at least one tooth (12b) relative to the reference plane (RP1);
(s6) a step for laterally adjusting the relative position between the cutting blade (13) and the scorer (12), according to direction and senses (F5), so as to cause the central planes (H1) e (H2) of said cutting blade (13) and of said scorer (12) to coincide;
the method being **characterized in that**
in step (s2) the exact position of said measurement plane (RP2) is defined precisely on the cutting machine (1) in respect to scoring plane (PINC) of the scorer (12) on the working plane (15), and namely said measurement plane (RP2) is defined either as coinciding with a scoring plane (PINC) of the scorer (12) Itself on the working plane (15) of the cutting machine (1) or is shifted by a known distance relative to said scoring plane (PINC), or else said exact position is defined relative to said rotation axis (X).

12. A method according to claim 11, **characterized in that** during said step (s5) the determination of the position of the central plane (H2) of said at least one tooth (12b) relative to the reference plane (RP1) is carried out based on the second distance (DST2) measured during step (s3) and on the thickness (LDI) of the tooth (12b) of the scorer (12) that is equivalent to the scoring width (LDIC) consequent to the adjustment step (s4).

13. An apparatus for the alignment of blades (12), (13) belonging to a cutting assembly (10) of a cutting machine (1) for panels (PNL) and, in particular, for the correct alignment between a cutting blade (13) and a relative scorer (12); the apparatus comprising an electronic control unit (CC) and a measurement system (SS); the apparatus being **characterized in that** the electronic control unit (CC) is programmed so as to implement the operating aligning method according to the preceding claims 1-12.

14. An apparatus according to claim 13, **characterized in that** the measurement device (SSL) of the measurement system (SS) is stationary relative to the structure of the cutting machine (1) and the moving ability of the saw carriage (11) and/or of the blades (12), (13) themselves is used to reach the measuring positions of the measurement device (SSL) on both blades (12), (13).

## Patentansprüche

1. Betriebsverfahren, das sich auf die korrekte Ausrichtung eines Scorers (12) und einer Schnittklinge (13) bezieht, um einen Schnitt ohne Späne und den gewünschten Eigenschaften entsprechend vorzunehmen; wobei der Scorer (12) und die Schnittklinge (13) zu einer Schnittbaugruppe (10) einer Schneidemaschine (1) für Platten (PNL) gehören und auf einem Sägewagen (11) mit jeweiligen Mittelebenen (H2), (H1) parallel zueinander und jeweiligen Drehachsen (X), (Y) angebracht sind, und wobei der Scorer (12) insbesondere für die korrekte Ausrichtung des Scorers (12) relativ zu der Schnittklinge (13) mit mehreren Zähnen (12a) versehen ist, die einen trapezförmigen Querschnitt aufweisen, und das Verfahren die folgenden Schritte umfasst, die nicht notwendigerweise in der nachfolgend angegebenen Reihenfolge erfolgen müssen:
(s1) ein Schritt zum Messen der Dicke (LDL) von mindestens einem Zahn (13a) der Schnittklinge (13) und einer ersten Distanz (DST1) des mindestens einen Zahns (13a) von einer Referenzebene (RP1), wobei letztere parallel zu den Mittelebenen (H2), (H1) des oben genannten Scorers (12) und der Schnittklinge (13) verläuft; wobei die Messschritte mittels eines Messsystems (SS) ausgeführt werden; wobei die Dicke (LDL) und die Distanz (DST1) die Position der Mittelebene (H1) des mindestens einen Zahns (13a) relativ zu der Referenzebene (RP1) bestimmen;
(s2) ein Schritt zum Ausführen der Messung einer Dicke (LDI) von mindestens einem Zahn (12a) des Scorers (12) entlang einer Messebene (RP2), die sich durch den Querschnitt der Zähne (12a) des Scorers (12) erstreckt, mittels des Messsystems (SS) ;
(s3) ein Schritt zum Messen der Dicke (LDI) von mindestens einem Zahn (12a) des Scorers (12) und einer zweiten Distanz (DST2) des mindestens einen Zahns (12a) von der Referenzebene (RP1), die der Messebene (RP2) entspricht; wobei der Messschritt mittels des Messsystems (SS) ausgeführt wird;
(s4) ein Schritt zum Einstellen der vertikalen Position des Scorers (12), nach einer Richtung und Ausrichtungen (F4), der nach dem Messschritt (s3) stattfindet, der auf die Erreichung einer Anritzbreite (LDIC) des mindestens einen Zahns (12a) auf der Anritzebene (PINC) mit dem Scorer (12) in seiner Betriebsposition abzielt, die mit der gemessenen Dicke (LDL) des oben genannten mindestens einen Zahns (13a) der Schnittklinge (13) kompatibel ist;
(s5) ein Schritt zum Bestimmen der Position der Mittelebene (H2) des mindestens einen Zahns (12a) relativ zu der Referenzebene (RP1);
(s6) ein Schritt zum lateralen Anpassen der relativen Position zwischen der Schnittklinge (13) und dem Scorer (12) nach der Richtung und den Ausrichtungen (F5), damit die Mittelebenen (H1) und (H2) der Schnittklinge (13) und des Scorers (12) übereinstimmen;
wobei das Verfahren **dadurch gekennzeichnet ist, dass**
in Schritt (s2) die genaue Position der Messebene (RP2) bezüglich der Anritzebene (PINC) des Scorers (12) auf der Arbeitsebene (15) auf der Schneidemaschine (1) genau definiert ist, und namentlich die Messebene (RP2) entweder als mit einer Anritzebene (PINC) des Scorers (12) selbst auf der Arbeitsebene (15) der Schneidemaschine (1) zusammenfallend definiert ist, oder sie um eine bekannte Distanz relativ zu der Anritzebene (PINC) verschoben wird, oder andernfalls die genaue Position relativ zu der Drehachse (X) definiert ist.

2. Verfahren nach Anspruch 1, **dadurch gekennzeichnet, dass** der Schritt (s5) des Bestimmens der Position der Mittelebene (H2) des mindestens einen Zahns (12a) relativ zu der Referenzebene (RP1) basierend auf der zweiten Distanz (DST2) und der Dicke (LDI) ausgeführt wird, die im Schritt (s3) gemessen wird.

3. Verfahren nach Anspruch 1, **dadurch gekennzeichnet, dass** der Schritt (s5) zum Bestimmen der Position der Mittelebene (H2) des mindestens einen Zahns (12a) relativ zu der Referenzebene (RP1) eine neue Messung der zweiten Distanz (DST2) und der Dicke (LDI) enthält, nachdem der Einstellschritt (s4) durchgeführt wurde; wobei die neuen Messungen (DST2), (LDI), der Messebene (RP2) oder einer anderen Ebene, die sich in einem bekannten Abstand von der Anritzebene (PINC) und der Messebene (RP2) befindet, entsprechend ausgeführt werden; wobei die Dicke (LDI) und die Distanz (DST2) die Position der Mittelebene (H2) des mindestens einen Zahns (12a) relativ zu der Referenzebene (RP1) bestimmen.

4. Verfahren nach Anspruch 1 bis 3, **dadurch gekennzeichnet, dass** der Einstellschritt (s4) eine Einstellung der Position des Scorers (12) relativ zu der Messebene (RP2) enthält, die auf die Erreichung eines Werts der Dicke (LDI) auf der oben genannten Ebene (RP2) abzielt, der, wenn sich der Scorer (12) in seiner Betriebsposition befindet, einer Anritzbreite (LDIC) des mindestens einen Zahns (12a) auf der Anritzebene (PINC) entspricht, die mit der gemessenen Dicke (LDL) des oben genannten mindestens einen Zahns (13a) der Schnittklinge (13) kompatibel ist.

5. Verfahren nach Anspruch 1 bis 3, **dadurch gekennzeichnet, dass** der Einstellschritt (s4) eine Einstellung der Position des Scorers (12) relativ zu der Messebene (RP2) enthält, die auf die Erreichung eines Werts der Dicke (LDI) auf der oben genannten Ebene (RP2) abzielt, der, wenn sich der Scorer (12) in seiner Betriebsposition befindet, einer Anritzbreite (LDIC) des mindestens einen Zahns (12a) auf der Anritzebene (PINC) entspricht, die mit der gemessenen Dicke (LDL) des oben genannten mindestens einen Zahns (13a) der Schnittklinge (13) kompatibel ist.

6. Verfahren nach Anspruch 1 bis 3, **dadurch gekennzeichnet, dass** der Schritt (s4) der oben genannten Anpassung der Position des Scorers (12) die Definition der Anritzbreite (LDIC) enthält, die mit der gemessenen Dicke (LDL) des mindestens einen Zahns (13a) der Schnittklinge (13) basierend auf dem Wert der gemessenen Dicke (LDI) und dem Wert der Basiswinkel des Trapezabschnitts des mindestens einen Zahns (12a) kompatibel ist, sodass die Anritzbreite (LDIC) auf der oben genannten Anritzebene (PINC) erreicht wird.

7. Verfahren nach Anspruch 1 bis 3, **dadurch gekennzeichnet, dass** der Schritt (s4) der oben genannten Anpassung der Position des Scorers (12) die vertikale Bewegung des Scorers (12) nach einer Richtung und Ausrichtungen (F4) enthält, die von einem Maß (QSCL), (QRCL) abhängen, das durch die Bewegung des Sägewagens (11) während eines Schritts zur Messung einer Dicke (LDI) gemessen wird, die einer Anritzbreite (LDIC) entspricht, die mit der gemessenen Dicke (LDL) des mindestens einen Zahns (13a) der Schnittklinge (13) kompatibel ist, um die Anritzbreite (LDIC) auf der oben genannten Ebene (PINC) zu erreichen.

8. Verfahren nach einem der Ansprüche 1 bis 7, **dadurch gekennzeichnet, dass** die Messebene (RP2) des Messsystems (SS) auf dem mindestens einen Zahn (12a) des Scorers (12) mit einer bekannten Distanz relativ zu der Anritzebene (PINC) oder relativ zu der Drehachse (X) zusammenfällt oder um diese verschoben wird, wenn sich der Scorer (12) selbst in der Betriebsarbeitsposition relativ zu der Anritzebene (PINC) befindet-

9. Verfahren nach einem der Ansprüche 1 bis 7, **dadurch gekennzeichnet, dass** die Messebene (RP2) des Messsystems (SS) auf dem mindestens einen Zahn (12a) des Scorers (12) mit einer bekannten Distanz relativ zu der Anritzebene (PINC) oder relativ zu der Drehachse (X) zusammenfällt oder um diese verschoben wird, wenn sich der Scorer (12) selbst in einer Ruheposition oder in einer anderen vorgegebenen Position relativ zu der Anritzebene (PINC) befindet.

10. Verfahren nach einem der Ansprüche 1 bis 7, **dadurch gekennzeichnet, dass** die Messebene (RP2) des Messsystems (SS) auf dem mindestens einen Zahn (12a) des Scorers (12) in jeder Position ihres Durchmessers in einer Distanz von der Drehachse (X) angeordnet ist, die der Distanz zwischen der Drehachse (X) des Scorers (12) und der Anritzebene (PINC) entspricht, oder um eine bekannte Distanz relativ zu der Distanz zwischen der Drehachse (X) des Scorers (12) und der Scoringebene (PINC) verschoben wird.

11. Betriebsverfahren, das sich auf die korrekte Ausrichtung eines Scorers (12) und einer Schnittklinge (13) bezieht, um einen Schnitt ohne Späne und den gewünschten Eigenschaften entsprechend vorzunehmen; der Scorer (12) und die Schnittklinge (13), die zu einer Schnittbaugruppe (10) einer Schneidemaschine (1) für Platten (PNL) gehören und auf einem Sägewagen (11) mit jeweiligen Mittelebenen (H2), (H1) parallel zueinander und jeweiligen Drehachsen (X), (Y) angebracht sind, und insbesondere für die korrekte Ausrichtung des Scorers (12) relativ zu der Schnittklinge (13), wobei der Scorer (12) mit mehreren geraden Zähnen (12b) mit einer einstellbaren Dicke versehen ist, und das Verfahren die folgenden Schritte umfasst, die nicht notwendigerweise in der nachfolgend angegebenen Reihenfolge erfolgen müssen:
(s1) ein Schritt zum Messen der Dicke (LDL) von mindestens einem Zahn (13a) der Schnittklinge (13) und einer ersten Distanz (DST1) des mindestens einen Zahns (13a) von einer ersten Referenzebene (RP1), wobei letztere parallel zu den Mittelebenen (H2), (H1) des oben genannten Scorers (12) und der Schnittklinge (13) verläuft; wobei die Messschritte mittels eines Messsystems (SS) ausgeführt werden; wobei die Dicke (LDL) und die Distanz (DST1) die Position der Mittelebene (H1) des mindestens einen Zahns (13a) relativ zu der Referenzebene (RP1) bestimmen;
(s2) ein Schritt zum Ausführen der Messung einer Dicke (LDI) von mindestens einem Zahn (12b) des Scorers (12) entlang einer Messebene (RP2), die sich durch den Querschnitt der Zähne (12b) des Scorers (12) erstreckt, mittels des Messsystems (SS);
(s3) ein Schritt zum Messen der Dicke (LDI) von mindestens einem Zahn (12b) des Scorers (12) und einer zweiten Distanz (DST2) des mindestens einen Zahns (12b) von der Referenzebene (RP1), die der Messebene (RP2) entspricht; wobei der Messschritt mittels des Messsystems (SS) ausgeführt wird;
(s4) ein Schritt zum Einstellen der Dicke von mindestens einem Zahn (12b) des Scorers (12), der nach dem Schritt (s3) stattfindet, der auf die Erreichung einer Anritzbreite (LDIC) des mindestens einen Zahns (12b) auf der Anritzebene (PINC) mit dem Scorer (12) in seiner Betriebsposition abzielt, die mit der gemessenen Dicke (LDL) des oben genannten mindestens einen Zahns (13a) der Schnittklinge (13) kompatibel ist;
(s5) ein Schritt zum Bestimmen der Position der Mittelebene (H2) des mindestens einen Zahns (12b) relativ zu der Referenzebene (RP1);
(s6) ein Schritt zum lateralen Anpassen der relativen Position zwischen der Schnittklinge (13) und dem Scorer (12) nach der Richtung und den Ausrichtungen (F5), damit die Mittelebenen (H1) und (H2) der Schnittklinge (13) und des Scorers (12) übereinstimmen;
wobei das Verfahren **dadurch gekennzeichnet ist, dass**
in Schritt (s2) die genaue Position der Messebene (RP2) bezüglich der Anritzebene (PINC) des Scorers (12) auf der Arbeitsebene (15) auf der Schneidemaschine (1) genau definiert ist, und namentlich die Messebene (RP2) entweder als mit einer Anritzebene (PINC) des Scorers (12) selbst auf der Arbeitsebene (15) der Schneidemaschine (1) zusammenfallend definiert ist, oder sie um eine bekannte Distanz relativ zu der Anritzebene (PINC) verschoben wird, oder andernfalls die genaue Position relativ zu der Drehachse (X) definiert ist.

12. Verfahren nach Anspruch 11, **dadurch gekennzeichnet, dass** in Schritt (s5) die Bestimmung der Position der Mittelebene (H2) des mindestens einen Zahns (12b) relativ zu der Referenzebene (RP1) basierend auf der zweiten Distanz (DST2), die während dem Schritt (s3) gemessen wird, und der Dicke (LDI) des Zahns (12b) des Scorers (12), die der Anritzbreite (LDIC) nach dem Anpassungsschritt (s4) entspricht, ausgeführt wird.

13. Verfahren zur Ausrichtung von Klingen (12), (13), die zu einer Schnittbaugruppe (10) einer Schneidemaschine (1) für Platten (PNL) gehören, und insbesondere für die korrekte Ausrichtung zwischen einer Schnittklinge (13) und einem relativen Scorer (12); wobei die Vorrichtung eine elektronische Steuereinheit (CC) und ein Messsystem (SS) umfasst; wobei die Vorrichtung **dadurch gekennzeichnet ist, dass** die elektronische Steuereinheit (CC) so programmiert ist, dass das Betriebsausrichtverfahren nach den vorhergehenden Ansprüchen 1 bis 12 umgesetzt wird.

14. Vorrichtung nach Anspruch 13, **dadurch gekennzeichnet, dass** die Messvorrichtung (SSL) des Messsystems (SS) relativ zu der Struktur der Schneidemaschine (1) stationär ist und die Bewegungsfähigkeit des Sägewagens (11) und/oder der Klingen (12), (13) selbst verwendet wird, um die Messpositionen der Messvorrichtung (SSL) an beiden Klingen (12), (13) zu erreichen.

## Revendications

1. Procédé de fonctionnement relatif au bon alignement d'une rainureuse (12) et d'une lame de coupe (13) de façon à obtenir une coupe sans déchiquetage et selon les caractéristiques souhaitées ; lesdites rainureuse (12) et lame de coupe (13) appartenant à un ensemble de coupe (10) d'une machine de coupe (1) pour des panneaux (PNL) et étant ajustées sur un chariot porte-scie (11) avec des plans centraux (H2), (H1) respectifs parallèles l'un à l'autre et des axes de rotation (X), (Y) respectifs et, en particulier, pour le bon alignement de ladite rainureuse (12) par rapport à ladite lame de coupe (13), ladite rainureuse (12) étant pourvue d'une pluralité de dents (12a) ayant une section trapézoïdale, le procédé comprenant les étapes suivantes, pas nécessairement dans l'ordre indiqué ci-dessous :
(s1) une étape de mesure de l'épaisseur (LDL) d'au moins une dent (13a) de ladite lame de coupe (13) et d'une première distance (DST1) de ladite au moins une dent (13a) à un plan de référence (RP1), ce dernier étant parallèle aux plans centraux (H2), (H1) de la rainureuse (12) et de la lame de coupe (13) susmentionnées ; lesdites étapes de mesure étant réalisées au moyen d'un système de mesure (SS) ; ladite épaisseur (LDL) et ladite distance (DST1) déterminant la position du plan central (H1) de ladite au moins une dent (13a) par rapport au plan de référence (RP1) ;
(s2) une étape de réalisation de la mesure d'une épaisseur (LDI) d'au moins une dent (12a) de ladite rainureuse (12) le long d'un plan de mesure (RP2), qui s'étend à travers la section des dents (12a) de la rainureuse (12), au moyen du système de mesure (SS) ;
(s3) une étape de mesure de l'épaisseur (LDI) d'au moins une dent (12a) de ladite rainureuse (12) et d'une seconde distance (DST2) de ladite au moins une dent (12a) audit plan de référence (RP1) en correspondance dudit plan de mesure (RP2) ; ladite étape de mesure étant réalisée au moyen du système de mesure (SS) ;
(s4) une étape de réglage de la position verticale de ladite rainureuse (12) selon une direction et des sens (F4), qui a lieu après ladite étape de mesure (S3) visant à obtenir, avec ladite rainureuse (12) dans sa position de fonctionnement, une largeur de rainurage (LDIC) de ladite au moins une dent (12a) sur ledit plan de rainurage (PINC) qui soit compatible avec l'épaisseur mesurée (LDL) de l'au moins une dent (13a) susmentionnée de la lame de coupe (13) ;
(s5) une étape de détermination de la position du plan central (H2) de ladite au moins une dent (12a) par rapport au plan de référence (RP1) ;
(s6) une étape de réglage latéral de la position relative entre la lame de coupe (13) et la rainureuse (12) selon une direction et des sens (F5), de façon à amener les plans centraux (H1) et (H2) de ladite lame de coupe (13) et de ladite rainureuse (12) à coïncider ;
le procédé étant **caractérisé en ce que**
à l'étape (s2) la position exacte dudit plan de mesure (RP2) est définie précisément sur la machine de coupe (1) par rapport au plan de rainurage (PINC) de la rainureuse (12) sur le plan de travail (15), et à savoir ledit plan de mesure (RP2) est défini soit comme coïncidant avec un plan de rainurage (PINC) de la rainureuse (12) elle-même sur le plan de travail (15) de la machine de coupe (1) soit est décalé d'une distance connue par rapport audit plan de rainurage (PINC), ou sinon ladite position exacte est définie par rapport audit axe de rotation (X).

2. Procédé selon la revendication 1, **caractérisé en ce que** pendant ladite étape (s5) la détermination de la position du plan central (H2) de ladite au moins une dent (12a) par rapport au plan de référence (RP1) est réalisée sur la base de la seconde distance (DST2) et de l'épaisseur (LDI) mesurées pendant ladite étape (s3).

3. Procédé selon la revendication 1, **caractérisé en ce que** ladite étape (s5) de détermination de la position du plan central (H2) de ladite au moins une dent (12a) par rapport au plan de référence (RP1) implique une nouvelle mesure de la seconde distance (DST2) et de l'épaisseur (LDI) suite à ladite étape de réglage (s4) ; lesdites nouvelles mesures (DST2), (LDI) étant réalisées en correspondance dudit plan de mesure (RP2) ou d'un autre plan situé à une distance connue dudit plan de rainurage (PINC) et dudit plan de mesure (RP2) ; ladite épaisseur (LDI) et ladite distance (DST2) déterminant la position du plan central (H2) de ladite au moins une dent (12a) par rapport au plan de référence (RP1).

4. Procédé selon les revendications 1 à 3, **caractérisé en ce que** ladite étape de réglage (s4) implique un réglage de la position de ladite rainureuse (12) par rapport audit plan de mesure (RP2) qui vise à obtenir, sur le plan (RP2) susmentionné, une valeur de l'épaisseur (LDI) qui soit équivalente, avec ladite rainureuse (12) dans sa position de fonctionnement, à une largeur de rainurage (LDIC) de ladite au moins une dent (12a) sur ledit plan de rainurage (PINC) qui est compatible avec l'épaisseur mesurée (LDL) de l'au moins une dent (13a) susmentionnée de la lame de coupe (13).

5. Procédé selon les revendications 1 à 3, **caractérisé en ce que** ladite étape de réglage (s4) implique un réglage de la position de ladite rainureuse (12) par rapport audit plan de mesure (RP2) qui vise à obtenir, sur le plan (RP2) susmentionné, une valeur de l'épaisseur (LDI) correspondant, avec ladite rainureuse (12) dans sa position de fonctionnement, à une largeur de rainurage (LDIC) de ladite au moins une dent (12a) sur ledit plan de rainurage (PINC) qui est compatible avec l'épaisseur mesurée (LDL) de l'au moins une dent (13a) susmentionnée de la lame de coupe (13).

6. Procédé selon les revendications 1 à 3, **caractérisé en ce que** pendant ladite étape (s4) le réglage susmentionné de la position de ladite rainureuse (12) implique la définition de ladite largeur de rainurage (LDIC) compatible avec l'épaisseur mesurée (LDL) de l'au moins une dent (13a) de la lame de coupe (13) sur la base de la valeur de ladite épaisseur mesurée (LDI) et de la valeur des angles de base de la section trapézoïdale de ladite au moins une dent (12a), de façon à obtenir ladite largeur de rainurage (LDIC) sur le plan de rainurage (PINC) susmentionné.

7. Procédé selon les revendications 1 à 3, **caractérisé en ce que** pendant ladite étape (s4) le réglage susmentionné de la position de ladite rainureuse (12) implique le déplacement vertical de ladite rainureuse (12), selon une direction et des sens (F4), en fonction d'une mesure (QSCL), (QRCL), mesurée à travers le déplacement du chariot porte-scie (11) pendant une étape de mesure d'une épaisseur (LDI) coïncidant avec une largeur de rainurage (LDIC) compatible avec l'épaisseur mesurée (LDL) de l'au moins une dent (13a) de la lame de coupe (13), de façon à obtenir ladite largeur de rainurage (LDIC) sur le plan de rainurage (PINC) susmentionné.

8. Procédé selon l'une quelconque des revendications 1 à 7, **caractérisé en ce que** le plan de mesure (RP2) dudit système de mesure (SS) sur ladite au moins une dent (12a) de la rainureuse (12) coïncide avec ou est décalé d'une distance connue par rapport au plan de rainurage (PINC) ou par rapport à l'axe de rotation (X), lorsque la rainureuse (12) elle-même est dans sa position de travail de fonctionnement par rapport au plan de rainurage (PINC).

9. Procédé selon l'une quelconque des revendications 1 à 7, **caractérisé en ce que** le plan de mesure (RP2) dudit système de mesure (SS) sur ladite au moins une dent (12a) de la rainureuse (12) coïncide avec ou est décalé d'une distance connue par rapport au plan de rainurage (PINC) ou par rapport à l'axe de rotation (X), lorsque la rainureuse (12) elle-même est dans une position de repos ou dans une autre position prédéfinie par rapport au plan de rainurage (PINC).

10. Procédé selon l'une quelconque des revendications 1 à 7, **caractérisé en ce que** le plan de mesure (RP2) dudit système de mesure (SS) sur ladite au moins une dent (12a) de la rainureuse (12) est agencé dans n'importe quelle position de son diamètre à une distance de l'axe de rotation (X) qui est équivalente à la distance entre l'axe de rotation (X) de ladite rainureuse (12) et ledit plan de rainurage (PINC) ou est décalé d'une distance connue par rapport à la distance entre l'axe de rotation (X) de la rainureuse (12) et ledit plan de rainurage (PINC).

11. Procédé de fonctionnement relatif au bon alignement d'une rainureuse (12) et d'une lame de coupe (13) de façon à obtenir une coupe sans déchiquetage et selon les particularités souhaitées ; lesdites rainureuses (12) et lame de coupe (13) appartenant à un ensemble de coupe (10) d'une machine de coupe (1) pour des panneaux (PNL) et étant ajustées sur un chariot porte-scie (11) avec des plans centraux (H2), (H1) respectifs parallèles l'un à l'autre et des axes de rotation (X), (Y) respectifs et, en particulier, pour le bon alignement de ladite rainureuse (12) par rapport à ladite lame de coupe (13), ladite rainureuse (12) étant pourvue d'une pluralité de dents droites (12b) d'une épaisseur réglable, le procédé comprenant les étapes suivantes, pas nécessairement dans l'ordre indiqué ci-dessous :
(s1) une étape de mesure de l'épaisseur (LDL) d'au moins une dent (13a) de ladite lame de coupe (13) et d'une première distance (DST1) de ladite au moins une dent (13a) à un plan de référence (RP1), ce dernier étant parallèle aux plans centraux (H2), (H1) de la rainureuse (12) et de la lame de coupe (13) susmentionnées ; lesdites étapes de mesure étant réalisées au moyen d'un système de mesure (SS) ; ladite épaisseur (LDL) et ladite distance (DST1) déterminant la position du plan central (H1) de ladite au moins une dent (13a) par rapport au plan de référence (RP1) ;
(s2) une étape de réalisation de la mesure d'une épaisseur (LDI) d'au moins une dent (12b) de ladite rainureuse (12) le long d'un plan de mesure (RP2), qui s'étend à travers la section des dents (12b) de la rainureuse (12), au moyen du système de mesure (SS) ;
(s3) une étape de mesure de l'épaisseur (LDI) d'au moins une dent (12b) de ladite rainureuse (12) et d'une seconde distance (DST2) de ladite au moins une dent (12b) audit plan de référence (RP1) en correspondance dudit plan de mesure (RP2) ; ladite étape de mesure étant réalisée au moyen du système de mesure (SS) ;
(s4) une étape de réglage de l'épaisseur d'au moins une dent (12b) de ladite rainureuse (12), qui a lieu après ladite étape de mesure (S3) visant à obtenir, avec ladite rainureuse (12) dans sa position de fonctionnement, une largeur de rainurage (LDIC) de ladite au moins une dent (12b) sur ledit plan de rainurage (PINC) qui soit compatible avec l'épaisseur mesurée (LDL) de l'au moins une dent (13a) susmentionnée de la lame de coupe (13) ;
(s5) une étape de détermination de la position du plan central (H2) de ladite au moins une dent (12b) par rapport au plan de référence (RP1) ;
(s6) une étape de réglage latéral de la position relative entre la lame de coupe (13) et la rainureuse (12) selon une direction et des sens (F5), de façon à amener les plans centraux (H1) et (H2) de ladite lame de coupe (13) et de ladite rainureuse (12) à coïncider ;
le procédé étant **caractérisé en ce que**
à l'étape (s2) la position exacte dudit plan de mesure (RP2) est définie précisément sur la machine de coupe (1) par rapport au plan de rainurage (PINC) de la rainureuse (12) sur le plan de travail (15), et à savoir ledit plan de mesure (RP2) est défini soit comme coïncidant avec un plan de rainurage (PINC) de la rainureuse (12) elle-même sur le plan de travail (15) de la machine de coupe (1) soit est décalé d'une distance connue par rapport audit plan de rainurage (PINC), ou sinon ladite position exacte est définie par rapport audit axe de rotation (X).

12. Procédé selon la revendication 11, **caractérisé en ce que** pendant ladite étape (s5) la détermination de la position du plan central (H2) de ladite au moins une dent (12b) par rapport au plan de référence (RP1) est réalisée sur la base de la seconde distance (DST2) mesurée pendant l'étape (s3) et de l'épaisseur (LDI) de la dent (12b) de la rainureuse (12) qui est équivalente à la largeur de rainurage (LDIC) suite à l'étape de réglage (s4).

13. Appareil pour l'alignement de lames (12), (13) appartenant à un ensemble de coupe (10) d'une machine de coupe (1) pour des panneaux (PNL) et, en particulier, pour le bon alignement entre une lame de coupe (13) et une rainureuse (12) relative ; l'appareil comprenant une unité de commande électronique (CC) et un système de mesure (SS) ; l'appareil étant **caractérisé en ce que** l'unité de commande électronique (CC) est programmée de façon à mettre en oeuvre le procédé d'alignement de fonctionnement selon les revendications 1 à 12 précédentes.

14. Appareil selon la revendication 13, **caractérisé en ce que** le dispositif de mesure (SSL) du système de mesure (SS) est fixe par rapport à la structure de la machine de coupe (1) et la capacité de mouvement du chariot porte-scie (11) et/ou des lames (12), (13) elles-mêmes est utilisée pour atteindre les positions de mesure du dispositif de mesure (SSL) sur les deux lames (12), (13).
